# EUROPÄISCHE PATENTSCHRIFT

(11) **EP 2 773 580 B1**
(45) Veröffentlichungstag und Bekanntmachung des Hinweises auf die Patenterteilung: **27.01.2016**
(21) Anmeldenummer: 11776810.1
(22) Anmeldetag: 02.11.2011
(51) Int. Cl.: B65G 47/90, B65G 57/06, B65G 61/00

(54) **VORRICHTUNG ZUR FÖRDERUNG UND HANDHABUNG VON PRODUKTEN**
MACHINE FOR CONVEYING AND HANDLING PRODUCTS
DISPOSITIF DE TRANSPORT ET DE MANUTENTION DE PRODUITS

(43) Veröffentlichungstag der Anmeldung: 10.09.2014
(73) Patentinhaber: Langhammer GmbH, 67304 Eisenberg (DE)
(72) Erfinder: SCHMITT, Georg, 67281 Kirchheim (DE); PES, Enrico, 67814 Dannenfels (DE)
(74) Vertreter: Hörschler, Wolfram Johannes
(86) Internationale Anmeldenummer: PCT/EP2011/069244
(87) Internationale Veröffentlichungsnummer: WO 2013/064180

(56) Entgegenhaltungen:
- EP-A1- 0 784 027
- EP-A1- 1 437 314
- WO-A1-2006/065090
- DE-A1- 4 206 038

## Beschreibung

### Stand der Technik

Die Erfindung betrifft ein Verfahren zur Handhabung von Produkten in einer Produkthandhabungsanlage und ein Verfahren zum Palettieren von Produktlagen. Zudem betrifft die Erfindung eine Vorrichtung zur Handhabung von Produkten in einer Produkthandhabungsanlage sowie die Verwendung der Vorrichtung zum Palettieren von Produktlagen.

Aus WO 2004 014 730 A1 ist ein Verfahren und eine Vorrichtung zur Verpackung von Produkten bekannt. Gemäß dieser Lösung erfolgt das Verpacken von Produkten mit Hilfe eines Sauggreifers, der das zu behandelnde Produkt ansaugt. Der Sauggreifer umfasst eine Anzahl von Saugern, die in der Horizontalen angeordnet sind, sowie mindestens einen Sauger, der in der Vertikalen angeordnet ist. Diese sind an einem Greiferarm aufgenommen, der sowohl lateral als auch in vertikaler Richtung, insbesondere in Z-Richtung bewegbar ist. Bei dieser Lösung ist zum sicheren Ergreifen und anschließenden Verpacken eines Artikels bzw. eines Produktes das Anlegen von Unterdruck erforderlich, welcher den Saugern, die an der Unterseite eines Greiferarmes angeordnet sein können, aufgegeben werden muss.

EP 0 629 573 B1 bezieht sich auf eine Zuführvorrichtung zur Aufnahme und Zufuhr von Artikeln. Auch bei dieser Lösung erfolgt die Aufnahme von Artikeln mittels Saugern, die am unteren Ende eines in Z-Richtung bewegbaren Greiferarmes angeordnet sind. Der Greiferarm ist daneben in einer X/Y-Ebene bewegbar und kann, wie den Zeichnungen der EP 0 629 573 B1 entnommen werden kann, in einer X/Y-Arbeitsebene verfahren werden. Auch gemäß dieser Lösung erfolgt das Ergreifen von Artikeln über durch eine Unterdruckquelle beaufschlagte Sauger, die an der Unterseite des in Z-Richtung auf und ab bewegbaren und innerhalb der X/Y-Arbeitsebene verfahrbaren Greiferarmes aufgenommen sind.

DE 101 11 680 A1 offenbart eine Vorrichtung zum Palettieren von etwa quaderförmigen Stückgütern zu einem Stückgutstapel. Die Vorrichtung umfasst eine Stückgutzuführung mit Führungsmitteln zum Ausrichten und/oder Verdrehen von Stückgütern aus mindestens einer Vorrichtung zum Zusammenstellen von Stückgutzeilen mit einer Förderbahn und mit einem Anschlag für die Stückgüter. Die Vorrichtung umfasst des Weiteren mindestens eine Schiebevorrichtung zum seitlichen Verschieben von Stückgutzeilen auf ein der Förderbahn benachbartes Lagentragmittel, wobei die auf dem Lagentragmittel zusammengestellte Stückgutlage auf dem Stückgutstapel verbringbar ist.

DE 43 14 832 C1 offenbart eine Stapelvorrichtung für tafelförmige Güter. Die Vorrichtung dient dem Stapeln von Blechtafeln mittels einer Transportvorrichtung, auf deren Transportfläche die Tafeln in zueinander beabstandeter Hintereinanderanordnung aufeinanderfolgend aufliegen und an einem Stapelablageort abgelegt werden. Die Transportvorrichtung weist eine oszillierende Weiche zum Aufteilen der Tafeln auf, wobei im Anschluss an die Weiche die Zuführung der Tafeln zu mindestens zwei Stapelablageorten mit Zuführeinrichtungen erfolgt. Deren Transportgeschwindigkeit ist gegenüber der Tafeltransportgeschwindigkeit einer der Weiche vorgeschaltete, der Transportvorrichtung angehörenden Zuführeinrichtung verringert.

DE 199 63 021 A1 hat einen Abförderer zur Aufnahme und für den Abtransport von Stapelbahnenstückgut zum Gegenstand. Der Abförderer umfasst ein insbesondere mehrteilig umlaufendes Abförderband in einem Anschluss an eine Vorrichtung zum automatischen Kommissionieren von Stapelbahnenstückgut. Es sind ein erster Förderer und beabstandeter Förderer sowie ein zwischengeordneter dritter Förderer vorgesehen, welcher aus der Förderbahn des ersten und des zweiten Förderers durch einen Stellantrieb herausstellbar ist. Der dritte Förderer dient als Sortierförderer, insbesondere als Sortierförderbahn zum Stapeln von sortiertem Stapelbahnstückgut in einem zugeordneten Magazin. Der Sortierförderer dient als Auswerfer von sortiertem Stückgut, insbesondere in einer verstellten nach unten verschwenkten Auslenkstellung.

DE 602 12 212 T2 offenbart ein Verfahren und eine Vorrichtung zum Bilden von geordneten Gruppen von Papierrollen. Gemäß dieser Lösung handelt es sich um eine Palettiervorrichtung, wobei ein Verfahren zum Bilden von geordneten Gruppen von Rollen aus Papier vorgeschlagen wird. Eine jede Gruppe in einer ersten Anzahl übereinander liegender Lagen umfasst Rollen. Jede Lage umfasst des Weiteren eine zweite Lage nebeneinander liegender Reihen, die jeweils durch eine dritte Anzahl von Rollen gebildet werden, die für alle Reihen gleich ist. Das Verfahren umfasst die Schritte des Vorbestimmens einer ersten, zweiten und dritten Anzahl aus jeweiligen Bereichen und das Befördern der Rollen in einer ersten Richtung zu einer Ladestation, um nacheinander an der Ladestation Reihen von Rollen zu bilden. Diese berühren einander in der ersten Richtung, wobei jede Reihe durch die vorbestimmte dritte Anzahl von Rollen gebildet wird. Des Weiteren ist das Entladen der Reihen nacheinander von der Ladestation in eine zweite Richtung quer zur ersten offenbart, um auf einem Träger eine Folge von nebeneinander liegenden Reihen zu bilden, wobei jede die vorbestimmte dritte Anzahl von Rollen umfasst. Ferner wird gemäß dieser Lösung das Entladen aufeinanderfolgender Teile der Folge von Reihen nacheinander von dem Träger in die erste Richtung vorgeschlagen, wobei jeder Teil durch die vorbestimmte zweite Anzahl von Reihen ausgebildet wird, so dass eine Folge von Lagen entsteht, die jeweils die vorbestimmte zweite Anzahl nebeneinanderliegender Reihen umfasst. Ferner umfasst das gemäß dieser Lösung vorgeschlagene Verfahren das Fördern der aufeinanderfolgenden Teile der Folge von Lagen in die erste Richtung zu den Stapelmitteln, wobei jeder Teil durch die vorbestimmte erste Anzahl von Lagen ausgebildet wird, um eine Folge von Gruppen zu bilden.

EP 1 437 314 A1 bezieht sich auf ein Verfahren und eine Vorrichtung zur automatischen Palettierung von Gegenständen. Gemäß dieser Lösung werden beispielsweise in Säcke verpackte Produkte gehandhabt. Auf einer diesen gegenüberliegenden Seite sind Greiferhände arrangiert, welche die Säcke untergreifen, wozu ferngesteuerte Köpfe eingesetzt werden. Diese sind zwischen einer Startposition und einer Greifposition bewegbar. In der Startposition befinden sich die ferngesteuerten Köpfe außerhalb der Säcke. Die Säcke werden von Greifeinrichtungen untergriffen, die ein längliches Ende mit einem zweiten Abschnitt aufweisen, welcher um eine Längsachse bewegt werden kann. Die Säcke werden auf Paletten in Stapelform angeliefert. Nach Untergreifen durch die Greifhände werden die Säcke angehoben, wobei die Säcke während des Anhebevorganges durch die zweiten Abschnitte der Greifeinrichtungen untergriffen bleiben.

DE 42 06 038 A1 bezieht sich auf eine Vorrichtung zum Auflösen und Bilden von Stückgutstapeln. Bei den Stückgutstapeln handelt es sich um Stapel aus Kisten, Kartons, Behältern oder dergleichen mit gleichen oder unterschiedlichen Stückgutlagen. Die Vorrichtung umfasst eine heb- und senkbare Greifvorrichtung, die über jeweilige Umsetzstationen verfahrbar ist und Greifsysteme aufweist. Die obere Stückgutlage wird zunächst durch Greifer erfasst und entsprechend der Stückguthöhe so positioniert, dass diese bodenseitig geringfügig oberhalb einer einfahrbahren Abstützebene liegen. Danach wird die Stückgutlage in dieser Halteposition durch seitlich angreifende Klemmleisten geklemmt, danach wird die Abstützebene unter die betreffende Lage verfahren.

WO 2006/065090 A1 offenbart ein automatisches Stapelentnahmegerät für bogenförmiges Material. Die Vorrichtung umfasst einen bewegbaren Rahmen mit einer Anzahl von Trägern, die einander gegenüberliegen und entlang einer X-Achse geführt sind sowie entlang einer Y-Achse geführt sind. Eine Anhebebrücke ist jedem der Beine zum Anheben und Absenken zugeordnet. Ferner ist ein Halter vorgesehen, der im Bereich der Anhebebrücke angeordnet ist, mit welchem das bogenförmige Material angehoben wird. Mit der aus WO 2006/065090 A1 hervorgehenden Anordnung können sehr effektiv verschiedene bogenförmige Materialien unterschiedlicher Größen gehandhabt werden, ohne dass es erforderlich wäre, die Anordnung an unterschiedliche Längen und Breiten des bogenförmigen Materials anzupassen.

EP 0 784 027 A1 bezieht sich auf eine Produktüberführungseinheit. Die Produktüberführungseinheit überführt Produkte. Eine Einheit umfasst einen umlaufenden Gurt, welcher sukzessive nacheinander Produkte entlang einer deformierbaren Förderfläche fördert. Die deformierbare Förderfläche wird durch einen Gurt dargestellt und erstreckt sich durch eine Aufnahmestation, an der die Produkte aufgenommen werden. Eine Deformierungseinrichtung ist zwischen der Förderoberfläche an der Station angeordnet und ermöglicht eine Deformation der Förderoberfläche derart, dass, nachdem das Produkt durch die Station zugeführt wird, zwei quer verlaufenden Dellen in der Oberfläche entstehen, in die wiederum Aufnahmeelemente eintauchen, um das Produkt anzuheben.

Die Nachteile der aus dem Stand der Technik bekannten Lösungen sind vor allem darin zu erblicken, dass diese relativ viel Stellfläche benötigen, die sehr teuer ist. In der Regel werden auf Setzflächen, in denen die in Rede stehenden Produkte entsprechend verschiedener Setzmuster angeordnet werden, in Größe einer Europalette ausgebildet. Eine Europalette hat die Maße 800 mm auf 1200 mm. Bei den bisherigen Lösungen gemäß des Standes der Technik werden seitlich Zinken oder rechenartige Gebilde zwischen die Setzfläche und das Produkt eingeschoben, wobei die geometrische Ausbildung der rechenartigen Gebilde gerade Palettengröße aufweist, so dass mithin bei nicht eingefahrenem Zustand der rechenartigen Gebilde, gerade die Palettenfläche nochmals verdoppelt wird, was zu der dargestellten Platzproblematik führt.

Weitere Nachteile der aus dem Stand der Technik bekannten Lösungen ergeben sich im Hinblick auf die stabile Handhabung der Produkte, die in verschiedenen Setzmustern angeordnet werden. So können die in Setzmuster angeordneten Produkte auf eine Rollenbahn aufgebracht werden und durch Zinken oder rechenartige Gebilde zwischen den Rollen von unten angehoben werden. In der Regel werden auch bei diesen Lösungen gemäß des Standes der Technik nach dem Anheben seitlich Zinken oder rechenartige Gebilde eingeschoben und die im Setzmuster angeordneten Produkte auf eine Palette befördert. Derartige Verfahren haben jedoch den Nachteil, dass das Produkt zunächst angehoben werden muss, bevor die Produkte auf die eigentliche Vorrichtung zum Befördern der Produkte aufgebracht werden können. Zusätzlich kann aufgrund der nur teilweisen Unterstützung der Produkte im Setzmuster die Stabilität nachteilig beeinflusst werden.

Auch im Hinblick auf zu handhabenden Produkte ergeben sich weitere Nachteile bei den aus dem Stand der Technik bekannten Lösungen. So sind insbesondere leicht zu beschädigende Produkte oder deren Verpackung entsprechend vorsichtig aufzunehmen und zu manövrieren. Bei der Aufnahme oder dem Untergreifen von Produkten mit rechenartigen Gebilden können durch die lokale Belastung leicht Schäden entstehen. Beim Greifen von Produkten mit Saugarmen kann zusätzlich eine leicht zu beschädigende Verpackung problematisch sein. So kann beispielsweise bei in Plastikfolie verpackten Produkten mit kleineren Beschädigungen, kein Vakuum durch Saugen erzeugt werden, und das Produkt nicht mit einem Saugarm gegriffen werden, was unter anderem zu Unterbrechungen im Betrieb der Anlage führen kann.

### Darstellung der Erfindung

Der vorliegenden Erfindung liegt die Aufgabe zugrunde, unter Beanspruchung minimaler Stellfläche, ein Verfahren und eine Vorrichtung zur Handhabung von Produkten bereitzustellen, mit dem bzw. mit der die Produkte sicher untergriffen werden und lagenweise, insbesondere auf einem palettenartig ausgebildeten Tragkörper in Stapelform aufgestapelt werden können.

Des Weiteren liegt der Erfindung die Aufgabe zugrunde, eine Gruppe von Produkten, die in einem variablen Setzmuster angeordnet sind, stets zuverlässig zu ergreifen, wobei ein sicheres Greifen beim ersten Zugriff gewährleistet ist.

Erfindungsgemäß wird ein Verfahren zur Handhabung von Produkten in einer Produkthandhabungsanlage vorgeschlagen, das nachfolgende Verfahrensschritte umfasst:
Zunächst erfolgt das Bereitstellen von mindestens einem Produkt auf einer flexibel gestalteten Setzfläche.

Anschließend erfolgt ein Aufsetzen eines Käfigs ausgestattet mit mindestens einer verfahrbaren Tragkörpergruppe auf die flexible Setzfläche.

Daran schließt sich ein Aufprägen mindestens einer Auslenkung auf die flexible Setzfläche und ein Verschieben der Auslenkung entlang der flexiblen Setzfläche an.

Beim Aufprägen der mindestens einen Auslenkung auf die flexibel ausgebildete Setzfläche erfolgt ein gleichzeitiges Einfahren der mindestens einen Tragkörpergruppe in einen durch die mindestens eine Auslenkung erzeugten Spalt zwischen der flexiblen Setzfläche und einer Unterseite der Produkte.

Produkthandhabungsanlagen der oben genannten Art umfassen typischerweise ein oder mehrere Stationen einer Produktionslinie, in denen Massenprodukte, wie Druckerpapier, Hygienepapiere, Getränke oder dergleichen, in verpackter und/oder unverpackter Form gehandhabt werden. Beispiele für derartige Stationen sind Setzeinheiten, in denen einzelne Produkte in einem Setzmuster zu einer Produktgruppe angeordnet werden, oder Palettiereinheiten, die Produkte oder Produktgruppen auf einer Ladeeinheit, wie einer Palette oder einem Container, stapeln. Um die Produkte oder die Produktgruppen zwischen einzelnen Stationen der Produktionslinie zu transportieren, werden üblicherweise Förderbänder eingesetzt, die beispielsweise als Kunststoff-, Textilgewebe-, Ketten- oder Rollenband ausgestaltet sein können. Am Ende einer Produktionslinie werden die Produkte typischerweise palettiert, indem in der Setzeinheit eine Produktlage auf der Setzfläche gebildet wird und die gebildeten Produktlagen nacheinander, lagenweise von der Palettiereinheit auf der Ladeeinheit gestapelt werden.

Die erfindungsgemäß vorgeschlagene Lösung ermöglicht es, Produkte oder Produktgruppen mit beliebigem Gewicht zuverlässig zu untergreifen und so deren sichere Handhabung beim Befördern der Produkte zu gewährleisten.

Zum Untergreifen wird in erfindungsgemäßem Verfahren der Käfig zunächst auf eine flexible Setzfläche, aufgesetzt. Die flexible Setzfläche kann als Förderband, beispielsweise als Kunststoff-, Kunststoffmodul- oder Rollenband, ausgestaltet sein. Beim Aufsetzen auf die flexible Setzfläche kann der Käfig durch einen Roboter, etwa einen Portal- oder Industrieroboter, von einer Position oberhalb der Produkte auf diese abgesenkt werden. Im abgesenkten Zustand kann der Käfig die Produkte auf der Setzfläche, die insbesondere in einem Setzmuster zu einer Produktgruppe angeordnet sein können, zumindest teilweise seitlich umschließen. So können feststehende Sicherungselemente ausgestaltet sein, Produkte angeordnet in einer vorgegebenen Form und Größe zu umschließen. Alternativ können die Sicherungselemente beweglich ausgelegt sein, um Produkte angeordnet in beliebigen Formen und Größen zu umschließen.

Weiterhin ist der Käfig mit mindestens einer verfahrbaren Tragkörpergruppe ausgestattet, die einseitig oder aneinander gegenüberliegenden Seiten des Käfigs angeordnet sein kann In einer Ausführungsform des erfindungsgemäßen Verfahrens werden die Tragkörpergruppen im Käfig in einer vertikalen Ruheposition gehalten. Nachdem der Käfig über den Produkten abgesenkt wurde, fahren die Tragkörpergruppen von einer im Wesentlichen senkrechten Position in eine im Wesentlichen waagerechte Position unter die Produkte. Im Wesentlichen senkrecht umfasst dabei Abweichungen von weniger als 30°, bevorzugt weniger als 15° und besonders bevorzugt weniger als 5° zur Vertikalen (Z-Richtung). Weiter umfasst im Wesentlichen waagerecht Abweichungen von weniger als 30°, bevorzugt weniger als 15° und besonders bevorzugt weniger als 5° zur Horizontalen (X-Richtung).

Vorzugsweise sind die Tragkörpergruppen flexibel ausgestaltet. Dies ermöglicht eine Führung der Tragkörpergruppen beispielsweise über Antriebsrollen, was eine raumsparende Konstruktion des Käfigs begünstigt. Insbesondere können die Tragkörpergruppen als Matten ausgestaltet sein, die flexibel miteinander verbundene Stäbe, etwa aus Karbon, Metall und/oder Kunststoff umfassen. Um das Ein- und Ausfahren der Matten zu realisieren, können diese an den Stabenden in eine Führung eingebracht sein und über Antriebsrollen von der im Wesentlichen senkrechten in die im Wesentlichen waagerechte Position (und umgekehrt) überführt werden. Die Länge der Stäbe richtet sich dabei maßgeblich nach der Fläche, die die durch Untergreifen aufzunehmenden Produkte einnehmen. Abhängig vom Gewicht der Produkte und damit der Last, die von den Tragkörpergruppen aufgenommen werden soll, können beispielsweise das Material oder der Durchmesser der Stäbe entsprechend angepasst werden.

Beim Übergang in die im Wesentlichen waagerechte Position erfolgt das Einfahren der Tragkörpergruppen gleichzeitig mit dem Aufprägen der Auslenkungen auf die flexibel ausgebildete Setzfläche. Gleichzeitig bedeutet in diesem Zusammenhang, dass sich die Tragkörpergruppen und die sich verschiebende Auslenkung der Setzfläche im Wesentlichen synchron und somit zeitlich abgestimmt bewegen. Das heißt die Tragkörpergruppe eilt der sich fortlaufenden Auslenkung in dem erzeugten Spalt zwischen der flexiblen Setzfläche und der Unterseite der Produkte hinter her. Somit können die Tragkörpergruppen im Käfig der Verschiebung der Auslenkung in der flexiblen Setzfläche folgen und unter die Produkte gefahren werden.

In einer weiteren Ausführungsform des erfindungsgemäßen Verfahrens werden die Auslenkungen in der flexiblen Setzfläche an einander gegenüberliegenden Enden einer Produktlängsseite erzeugt. In dieser Ausführungsform sind an einander gegenüberliegenden Enden des Käfigs entsprechende Tragkörpergruppen vorgesehen, die der Verschiebung der Auslenkungen in der flexiblen Setzfläche folgen können. Alternativ können die Auslenkungen in der flexiblen Setzfläche an einem Enden der Produktlängsseite erzeugt werden, wobei die Auslenkungen entlang der vollen Produktlänge verschoben werden können. Entsprechend kann in dieser Ausführungsform eine Tragkörpergruppe an einer Seite des Käfigs vorgesehen werden, die der Verschiebung der Auslenkung folgt.

Zur Erzeugung der Auslenkung können unterschiedliche Mechanismen eingesetzt werden. So können bei einem Rollenband als Setzfläche pneumatische, hydraulische und/oder elektromotorische Mechanismen verwendet werden, um einzelne Rollen in einer fortlaufenden Bewegung auszulenken. Beispielsweise können Federn unterhalb der Rollen angeordnet sein, die durch eine entsprechende Ansteuerung das Auslenken des Förderbandes und das Verschieben der Auslenkungen verursachen.

Alternativ können unterhalb der flexiblen Setzfläche angeordnete Auslenkelemente eingesetzt werden, die Auslenkungen in der Setzfläche erzeugen und verschieben. Bevorzugt werden die an den Enden der Produktlängsseite erzeugten Auslenkungen der flexiblen Setzfläche durch aufeinander Zubewegen der Auslenkelemente verschoben. Insbesondere werden die in der flexiblen Setzfläche erzeugten Auslenkungen gleichzeitig aufeinander zu verfahren. Zum Untergreifen werden in dieser Ausführungsform an einander gegenüberliegenden Enden der Produktlängsseite Tragkörpergruppen im Käfig vorgesehen, damit diese gleichzeitig mit den erzeugten Auslenkungen eingefahren werden können.

Die in der flexiblen Setzfläche verfahrbaren Auslenkungen können durch mechanisch betätigbarer Auslenkelemente erzeugt werden, die vorzugsweise unterhalb der Setzfläche und insbesondere unterhalb des Förderbandes angeordnet sind. Die Form der Auslenkelemente kann dabei so gewählt sein, dass keine scharfen Kanten, etwa Ecken, auf die flexible Setzfläche beim Aufprägen der Auslenkung einwirken, um Beschädigungen zu vermeiden. Vorzugsweise sind die Auslenkelemente daher in den Bereichen abgerundet, in denen diese unmittelbar auf die flexible Setzfläche einwirken können. Damit die Auslenkelemente eine Auslenkung der flexiblen Setzfläche erzeugen können und gleichzeitig die Tragkörpergruppe unter die Produkte gefahren werden kann, können mehrere Auslenkelemente, bevorzugt zumindest teilweise entlang einer Produktlängsseite, angeordnet sein. Alternativ kann pro Tragkörpergruppe ein Auslenkelement unter der Setzfläche vorgesehen sein, dessen Ausdehnung sich zumindest teilweise entlang einer Produktlängsseite erstreckt. Die Auslenkelemente, welche der flexiblen Setzfläche Auslenkungen aufprägen, können weiterhin elektromotorisch, pneumatisch oder hydraulisch angetrieben sein.

In einer Realisierung des erfindungsgemäßen Verfahrens werden die Auslenkelemente entlang eines geschlossenen, kurvenförmigen Verfahrwegs verfahren. Der geschlossene, kurvenförmige Verfahrweg umfasst dazu einen Hebeabschnitt, in dem das Auslenkelement angehoben wird, einen Verfahrabschnitt, in dem sich das Auslenkelement in angehobener Position befindet, einen Absenkabschnitt, in dem das Auslenkelement abgesenkt wird, sowie einen Rücklaufabschnitt, in dem das Auslenkelement zurückgeführt wird. Die Auslenkelemente werden im Hebeabschnitt, insbesondere durch eine diesem zugeordnete Kulisse, angehoben.

Erfindungsgemäß wird das vorstehend beschriebene Verfahren in einem Verfahren zum Palettieren von Produkten verwendet. Dazu können wiederholt folgende Verfahrensschritte ausgeführt werden:
Zunächst wird eine Produktlage mit einem Produkt oder mehreren Produkten angeordnet in einem Setzmuster bereitgestellt. Dies geschieht typischerweise in einer Setzeinheit, in der die Produkte durch Greifer oder Schieber angeordnet werden.

Anschließend wird die Produktlage nach dem vorstehend beschriebenen Verfahren in einen Käfig aufgenommen. Dies kann direkt nach Bereitstellen der Produkte beispielsweise in der Setzeinheit oder aber auf einem nachfolgenden Pickplatz erfolgen.

Die aufgenommene Produktlage wird dann mit einem an den Käfig angeschlossenen Roboter zu der Position der Ladeeinheit, beispielsweise der Palette, transportiert. Als Roboter kann beispielsweise ein Linearroboter mit bis zu 3 Linearachsen und gegebenenfalls bis zu 3 Rotationsachsen oder ein Gelenkarmroboter mit bis zu 6 Rotationsachen eingesetzt werden.

In der Position der Palette angekommen, können die Tragkörpergruppen über Rollen in entgegengesetzter Richtung angetrieben werden und von der Aufnahmeposition in die Ruheposition übergehen. So kann die transportierte Produktlage auf der Ladeeinheit abgesetzt werden.

Anschließend wird der entleerte Käfig mit dem Roboter in eine Position oberhalb der bereitgestellten Produktlage zurückgeführt und ist damit erneut bereit eine Produktlage aufzunehmen. So können nacheinander Produktlagen auf der Ladeeinheit gestapelt werden.

Zudem wird erfindungsgemäß eine Vorrichtung zur Handhabung von Produkten in einer Produkthandhabungsanlage vorgeschlagen, die vorzugsweise zur Durchführung der zuvor beschriebenen Verfahren geeignet ist. Dazu umfasst die Vorrichtung zumindest nachfolgende Komponenten:
- eine Station, die mindestens ein Produkt auf einer flexiblen Setzfläche bereitstellt;
- eine Auslenkeinheit, die der flexiblen Setzfläche zugeordnet ist und ausgebildet ist, mindestens eine Auslenkung auf die flexible Setzfläche aufzuprägen und entlang der flexiblen Setzfläche zu verschieben;
- einen Käfig zur Aufnahme von Produkten, wobei der Käfig mit mindestens einer verfahrbaren Tragkörpergruppe ausgestattet ist, die gleichzeitig mit Verschieben der mindestens einen Auslenkung in einen durch die mindestens eine Auslenkung erzeugten Spalt zwischen der flexiblen Setzfläche und eine Unterseite der Produkte einfahrbar ist.

In einer Ausführungsform der erfindungsgemäßen Vorrichtung umfasst die flexible Setzfläche ein Förderband, das als Kunststoff-, Gewebe-, Modul- oder Rollenband ausgestaltet sein kann. Die Setzfläche kann dabei einen Teil der Setzeinheit bilden oder die Produkte können in der Setzeinheit im vorgesehenen Setzmuster formiert werden und anschließend auf den Pickplatz mit Setzfläche transportiert werden.

Die Auslenkeinheit kann Auslenkelemente umfassen, die unterhalb der Setzfläche in einer Führung für einen geschlossenen, kurvenförmigen Verfahrweg verfahrbar gelagert sind. Die Führung umfasst insbesondere eine Kulisse zum Anheben des Auslenkelements, einen Verfahrabschnitt zum Verfahren des Auslenkelementes in angehobener Position, einen Absenkabschnitt zum Absenken der Auslenkelementes sowie einen Rücklaufabschnitt zum Rückführen des Auslenkelementes.

Zum Aufprägen von Auslenkungen auf die Setzfläche können die Auslenkelemente elektromotorisch, pneumatisch und/oder hydraulisch angetrieben sein. Die Auslenkelemente können insbesondere mechanisch betätigbar ausgestaltet sein, um in der flexiblen Setzfläche verfahrbare Auslenkungen zu erzeugen.

In einer weiteren Ausführungsform der erfindungsgemäßen Vorrichtung sind die Tragkörpergruppen im Käfig und die Auslenkelemente unterhalb der Setzfläche an den Enden der Produktlängsseite angeordnet und zur Mitte der Produktlage hin verfahrbar gelagert. Die Tragkörpergruppen können dabei als flexible Matte aus Metallstäben mit flexiblen Verbindungselementen ausgestaltet sein.

In einer weiteren Ausführungsform der erfindungsgemäßen Vorrichtung sind die Tragkörpergruppen in der Ruheposition vertikal und in der Aufnahmeposition unter das Produkt gefahren angeordnet.

Weiter wird erfindungsgemäß die Verwendung der vorstehend beschriebenen Vorrichtung zur Handhabung von Produkten in einer Vorrichtung zum Palettieren von Produkten vorgeschlagen. Insbesondere kann die vorstehend beschriebene Vorrichtung zum Aufnehmen und/oder Transportieren von Produkten dienen. Eine derartige Vorrichtung zum Palettieren von Produkten kann unter anderen nachfolgende Komponenten umfassen:
- eine Setzeinheit zum Bereitstellen einer Produktlage mit Produkten angeordnet in einem Setzmuster;
- eine Aufnahmeeinheit zum Aufnehmen der Produktlage in einen Käfig und zum Absetzen der Produktlage auf einer Palette nach vorstehend beschriebenem Verfahren;
- einen an die Aufnahmeeinheit angeschlossenen Roboter zum Befördern der Produktlage.

### Vorteile der Erfindung

Die Erfindung ermöglicht eine sichere Handhabung von Produkten in Produktionslinien, insbesondere bei der End-of-Line-Palettierung. So wird durch das Untergreifen von den Produkten mit den Tragkörpergruppen erreicht, dass Produkte und insbesondere Produktgruppen, bei denen die Produkte in einem vorgegebenen Setzmuster angeordnet sind, stabil und sicher gehandhabt werden können.

Weiterhin können die Tragkörpergruppen in einer Ruheposition vertikal angeordnet sein, so dass die erfindungsgemäße Vorrichtung eine minimale Stellfläche beansprucht. Insbesondere bei automatisierten Anlagen zur Großproduktion führt die erfindungsgemäße Vorrichtung zu nicht unerheblichen Einsparungen im Platzbedarf.

Durch das Aufprägen mindestens einer Auslenkung auf die flexible Setzfläche und das gleichzeitige Einfahren der Tragkörpergruppen wird weiterhin eine schnelle Handhabung erreicht, da keine Zwischenschritte zum Anheben und Untergreifen der Produkte notwendig sind. Dies resultiert in einer schnellen Handhabung der Produkte mit verminderten Leerlaufzeiten und erhöht somit das Leistungsvermögen von industriellen Produktionslinien.

Der erhöhten Systemverfügbarkeit steht dabei ein geringer Montageaufwand gegenüber. Denn das Aufprägen einer Auslenkung auf die flexible Setzfläche kann mit wenigen Komponenten realisiert werden. Die einfache Konstruktion stellt dabei eine zuverlässige und kostengünstige Möglichkeit zur automatisierten Handhabung von Produkten zur Verfügung. Insbesondere kann die Auslenkeinheit mit rein mechanischen Elementen realisiert werden, was eine zuverlässige und wartungsarme Ausführung der Auslenkeinheit zulässt.

Situationen, in denen Produkte in Setzmustern befördert werden, kommen in der industriellen Großproduktion häufig vor und die Erfindung kann einen erheblichen Beitrag zur kostengünstigen und schnellen Bereitstellung von Produkten leisten.

### Kurze Beschreibung der Zeichnung

Anhand der Zeichnungen wird die Erfindung nachstehend eingehender beschrieben.

Es zeigen:
- Figur 1: eine schematische Darstellung einer Produkthandhabungsanlage ausgerüstet mit erfindungsgemäßer Vorrichtung zur Handhabung von Produkten,
- Figur 2a: eine schematische Darstellung eines Käfigs zur Aufnahme von Produkten gemäß Figur 1 mit Tragkörpergruppen in einer Ruheposition,
- Figur 2b: eine schematische Darstellung des Käfigs zur Aufnahme von Produkten gemäß Figur 2a mit Tragkörpergruppen in einer aufnahmebereiten Position,
- Figur 3: die Erzeugung einer Auslenkung in der flexiblen Setzfläche, sowie Auslenkmittel, die besagte Auslenkung in der flexiblen Setzfläche erzeugen sowie ein seitliches Einfahren der Tragkörpergruppe in den entstandenen Spalt zwischen Produkt und flexibler Setzfläche,
- Figur 4: in schematischer Weise Positionen von Auslenkelementen, die unterhalb der flexiblen Setzfläche angeordnet sind und in der flexiblen Setzfläche verschiebbare Auslenkung erzeugen,
- Figur 5: eine Detaildarstellung eines Verrastmechanismusses der Auslenkelemente samt einer die Auslenkelemente steuernden Kulissenkurve, und
- Figur 6: eine schematische Darstellung der Auslenkeinheit in einem Längsschnitt.

### Ausführungsvarianten

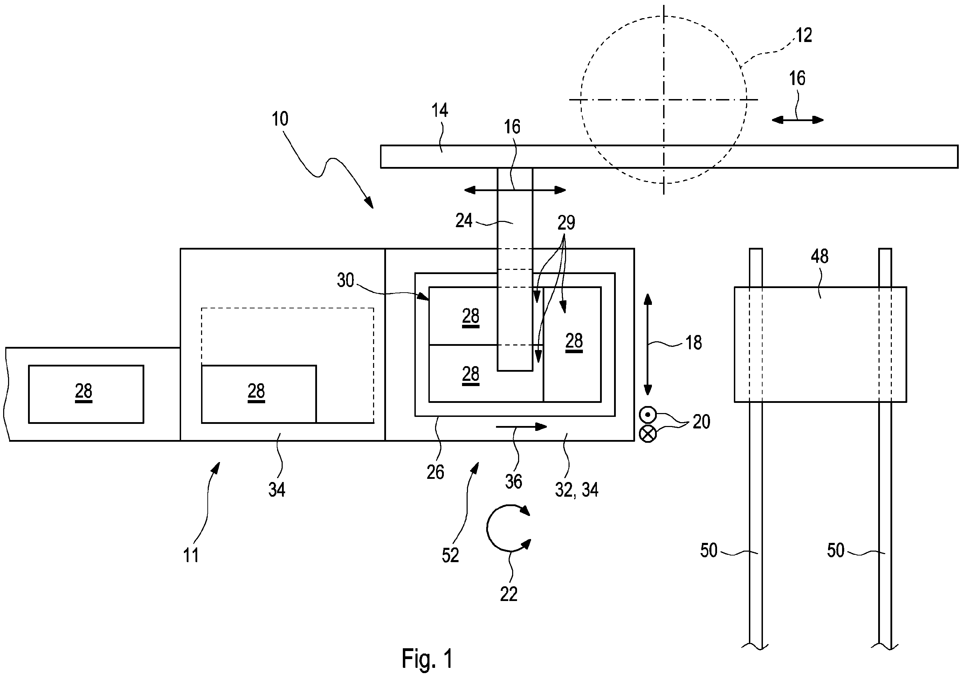

Figur 1 zeigt beispielhaft eine Produkthandhabungsanlage 10, wie sie sich bei typischen Produktionsanlagen am Ende der Produktionslinie, insbesondere zum Palettieren, finden lassen. Dabei werden die gefertigten und häufig schon verpackten Produkte 28 von einer Transporteinheit, meist einem Förderband 34, in eine Setzeinheit 11 transportiert, wo variable Setzmuster 29 gebildet werden. Das Setzmuster 29 bestimmt sich im Allgemeinen nach der Ausdehnung der Ladeeinheit 48, etwa einer Palette, auf die die im Setzmuster 29 angeordneten Produkte 28 lagenweise gestapelt aufgebracht werden sollen.

Nach Bildung des Setzmusters 29 in der Setzeinheit 11 wird die Produktlage 30 in erfindungsgemäße Produkthandhabungsanlage 10 befördert. Die Produkthandhabungsanlage 10 umfasst einen Roboter 12, 14, der beispielsweise als komplexer Industrieroboter 12 oder in einfacheren Ausführungen als Portalroboter 14 ausgestaltet sein kann. In der in der Figur 1 gezeigten Ausführungsform ist beispielhaft ein Portalroboter 14 dargestellt und mit gestrichelten Linien die Möglichkeit eines Industrieroboters 12 angedeutet.

Mit einem Portalroboter 14 kann eine einfachere Steuerung zur Produkthandhabung realisiert werden. Denn zum Befördern von Produktlagen 30 umfasst der Portalroboter 14 einen zumindest in X- und in Z-Richtung 16, 20 beweglich gelagerten Arm 24. An den Arm 24 schließt sich ein Käfig 26 an, der die Produktlage 30 vom Pickplatz 52 aufnimmt und mit Hilfe des Portalroboters 14 auf die Palette 48 transportiert.

In anderen Ausführungsformen kann der Roboter 12, 14 auch ein Industrieroboter 12 mit Gelenkarm oder Knickarm sein. Derartige Roboter 12 ermöglichen zusätzliche Bewegungen im dreidimensionalen Raum 16, 18, 20, 22, wodurch eine flexiblere Handhabung des Käfigs 26 und der darin gegebenenfalls aufgenommenen Produktlage 30 erreicht werden kann.

An den Arm 24 des Portalroboters 14 oder den Gelenkarm des Industrieroboters 12 schließt sich der Käfig 26 an, der zum Aufnehmen der Produktlage 30 dient. Nach Bildung des Setzmusters 29 und Befördern der Produktlage 30 in den Pickplatz 52, befindet sich die Produktlage 30 auf einer Setzfläche 32, die von einem Förderband 34 gebildet wird. Das Förderband 34 kann beispielsweise auf Rollen in Umlaufrichtung 36 bewegbar gelagert sein. So kann die in der Setzeinheit 11 gebildete Produktlage 30 in eine Position auf dem Pickplatz 52 gebracht werden, aus der der Käfig 26 die Produktlage 30 aufnehmen kann.

Dazu befindet sich der Käfig 26 zunächst oberhalb der Produktlage 30. Anschließend wird der Arm 24 des Portalroboters 14 in Z-Richtung 20 so weit verschoben, dass der Käfig 26 die Produktlage 30 seitlich umschließt. Nach der Aufnahme der Produktlage 30 in den Käfig 26 bewegt der Portalroboter 14 den Käfig 26 in Z- und X-Richtung 20, 16 in eine Position oberhalb der Ladeeinheit 48 und der Käfig wird geöffnet, um die Produktlage auf der Ladeeinheit 48 abzusetzen. So werden mehrere Produktlagen 30 auf der Palette 48 gestapelt und diese anschließend über Förderschienen 50 beispielsweise in eine Lagerhalle oder zum Weitertransport in einen LKW befördert.

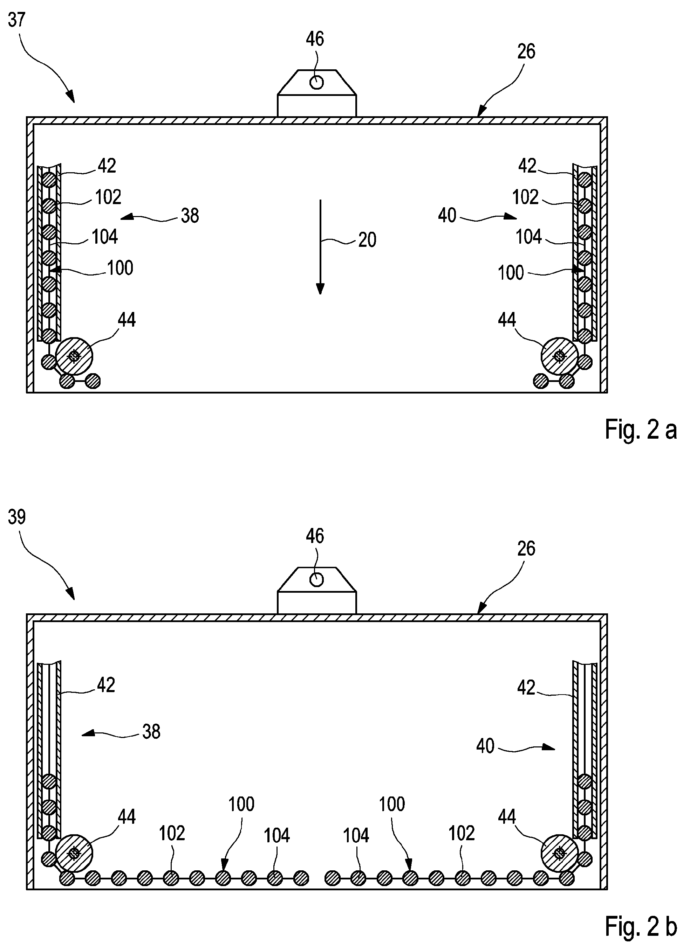

Figur 2A zeigt eine Schnittansicht des Käfigs 26, der eine erste und eine zweite Tragkörpergruppe 38, 40 in einer Tragkörperführung 42 umfasst. Bei dem dargestellten Käfig 26 sind die erste und die zweite Tragkörpergruppe 38, 40 in der Tragkörperführung 42 in der Ruheposition 37 gehalten. Weiterhin sind die Tragkörpergruppen 38, 40 flexibel ausgestaltet und können über Rollen 44 in die in Figur 2B gezeigte Aufnahmeposition 39 überführt werden. Insbesondere ist die Tragkörperführung 42 senkrecht entlang der Z-Achse 20 im Käfig 26 montiert. So nehmen die Tragkörperführungsgruppen 38, 40 in der Ruheposition 37 wenig Platz in Anspruch.

Zur Aufnahme der Produktlage 30 wird der Käfig 26 mit den Tragkörpergruppen 38, 40 von oberhalb der Produktlage 30 in Z-Richtung 20 auf dem Pickplatz 52 positioniert. Anschließend wird eine Auslenkeinheit 59 unterhalb der Produktlage 30 so betätigt, dass die Tragkörpergruppen 38, 40 über die Rollen 44 unter die Produktlage 30 geführt werden können. Danach befinden sich die Tragkörpergruppen 38, 40 in der in Figur 2B gezeigten Position 39. Mit den Tragkörpergruppen 38, 40 unterhalb der Produktlage 30 kann der mit dem Käfig 26 an der Anlenkstelle 46 verbundene Roboter 12, 14 die Produktlage 30 in beliebige Positionen verfahren. Zum Absetzen der Produktlage 30 auf der Palette 48 werden die Rollen 44 in entgegengesetzter Richtung angetrieben. Die Tragkörpergruppen 38, 40 bewegen sich entlang der Tragkörperführung 42 in die Ruheposition 37 und die Produktlage 30 wird auf die Palette 48 abgesetzt.

Die Tragkörpergruppen 38, 40 umfassen in der in Figur 2A und 2B gezeigten Ausführungsform flexible Matten 100. Die Matten 100 sind aus Stäben 102 gefertigt, die beispielsweise durch flexible Verbindungselemente 104 zusammengehalten werden. Dabei sind die Stäbe 102 so ausgerichtet, dass ein Führen über die Rollen 44 möglich ist. Insbesondere kann die Länge und der Durchmesser der Stäbe 102 sowie das flexible Material zum Verbinden der Stäbe 102 an die zu transportierenden Produkte 28, 30, beispielsweise deren Ausdehnung und/oder Gewicht, angepasst werden.

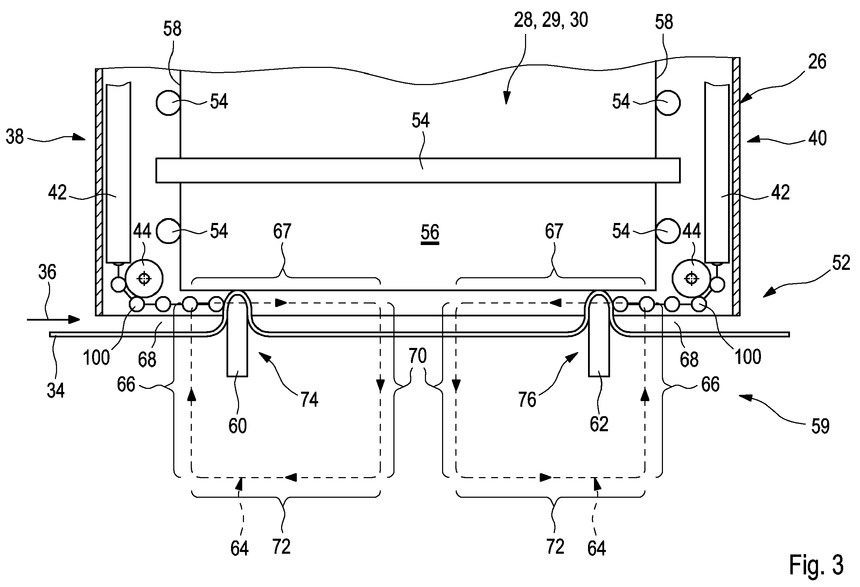

Figur 3 zeigt eine Seitenansicht auf den Pickplatz 52 mit aufgesetztem Käfig 26, der die Produktlage 30 umschließt. Um eine sichere Aufnahme zu gewährleisten und etwaiges Verrutschen der Produkte 28 in der Produktlage 30 zu verhindern, umfasst der Käfig 26 weiterhin Sicherungselemente 54, die die Produkte 28 in dem vorgegebenen Setzmuster 29 halten. Die Sicherungselemente 54 können dabei fixiert auf eine Größe der Produktlage 30 oder beweglich für unterschiedliche Größen der Produktlage 30 ausgestaltet sein. Vorzugsweise liegen die Sicherungselemente 54 an den Produktquerseiten 58 an.

Zur Aufnahme der Produktlage 30 durch die Tragkörpergruppen 38, 40 im Käfig 26 ist unterhalb des Förderbandes 34 eine Auslenkeinheit 59 angebracht. Die Auslenkeinheit 59 umfasst Auslenkelemente 60, 62, die über einen Führungsmechanismus entlang des Fahrweges 64 bewegt werden. In Figur 3 ist der Fahrweg des ersten Auslenkelements 60 anhand der gestrichelten Linie 64 schematisch angedeutet.

Um die Tragkörpergruppe 38 unter die Produktlage 30 zu führen, wird das Auslenkelement 60 entlang des Hebeabschnittes 66 unterhalb des Förderbandes 34 unmittelbar neben der Produktlage 30 angehoben. Anschließend wird das Auslenkelement 60 entlang des Verfahrabschnittes 67 zur Mitte der Produktlage 30 hinbewegt. Gleichzeitig ist der Rollenantrieb 44 der Tragkörpergruppe 38 so ausgelegt, dass die Tragkörpergruppe 38 der Auslenkung des Förderbandes 74 hinterhereilt. Durch die Auslenkung des Förderbandes 74 mit dem Auslenkelement 60 entsteht somit ein Spalt 68 unterhalb der Produktlage 30 durch den die Tragkörpergruppe 38 unter die Produktlage 30 geführt wird.

In gleicher Weise wird das Auslenkelement 62 und die Tragkörpergruppe 40 von der anderen Seite kommend betrieben. In der Mitte der Produktlage 30 treffen die Auslenkelemente 60, 62 aufeinander, was das Herabsenken der Auslenkelement 60, 62 entlang des Absenkabschnittes 70 verursacht. Anschließend können die Auslenkelement 60, 62 entlang des Rücklaufabschnittes 72 in ihre ursprüngliche Position zurückgeführt werden. Durch die Auslenkeinheit 59 werden somit die Tragkörpergruppen 38, 42 unter die Produktlage 30 geführt und die Produktlage 30 kann von dem Käfig 26 aufgenommen werden.

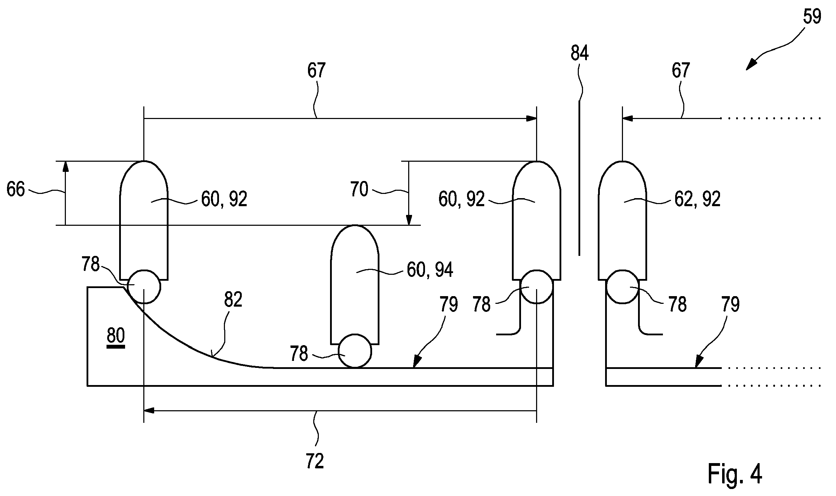

Die Auslenkeinheit 59 kann weiterhin pneumatisch, hydraulisch oder mechanisch realisiert werden. In den Figuren 4 bis 6 ist beispielhaft eine mechanische Realisierung der Auslenkeinheit 59 gezeigt. Die Auslenkelemente 60, 62 bewegen sich beispielsweise über Rollen 78 in einer Führung 79 entlang des Verfahrweges 64. Eine Kulisse 80 mit einer Abrollfläche 82 hebt die Auslenkelemente 60, 62 an, so dass das Förderband 34 ausgelenkt wird. An der Kontaktstelle 84 der Auslenkelemente 60, 62 werden diese herabgesenkt und auf dem Rücklaufabschnitt 72 verfahren.

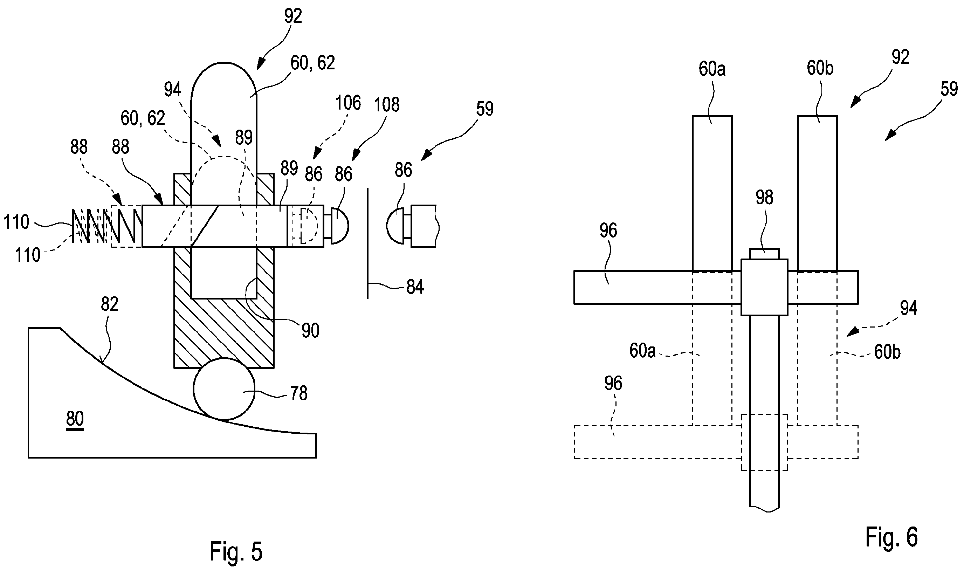

Das Auslenken und Herabsenken der Auslenkelemente 60, 62 in eine aufgestellte Position 92 bzw. eine abgesenkte Position 94 kann beispielsweise mittels der in Figur 5 gezeigten Vorrichtung mit Verrastmechanismus realisiert werden. Dazu ist ein Sicherungskeil 88 in der Führung 90 vorgesehen, der eine Aussparung 89 aufweist. Die Aussparung 89 ermöglicht dabei, dass das Auslenkelement 60, 62 eine aufgestellte Position 92 und eine abgesenkte Position 94 einnehmen kann. In der ersten Position 108 bewirkt der Sicherungskeil 88, dass sich das Auslenkelement 60, 62 in der aufgestellten Position 92 befindet. Dabei ist eine Feder 110 vorgesehen, die den Sicherungskeil 88 in der ersten Position 108 hält. Beim Kontakt der Puffer 86 an der Kontaktstelle 84 wird die Feder 110 zusammengepresst, der Sicherungskeil 88 geht in die zweite Position 106 über und das Auslenkelement 60, 62 senkt sich in die abgesenkte Position 94.

Auf dem Rücklaufabschnitt 72 befinden sich die Auslenkelemente 60, 62 in der abgesenkten Position 94. Beim Verfahren entlang der Kulisse 80 mit der Abrollfläche 82 werden die Auslenkelemente 60, 62 zum Förderband 34 hin ausgelenkt bis der Sicherungskeil 88 die Auslenkelemente 60, 62 in der aufgestellten Position 92 hält. Anschließend verfahren die Auslenkelemente 60, 62 entlang des Verfahrabschnittes 67 zur Mitte der Produktlage 30, wo die Puffer 86 der beiden Auslenkelemente 60, 62 aufeinandertreffen. Das Aufeinandertreffen der Puffer 86 löst den Sicherungskeil 88 und die Auslenkelemente 60, 62 bewegen sich entlang der Aussparung89 in die abgesenkte Position 94. Anschließend bewegen sich die Auslenkelemente 60, 62 mittels der Rollen 78 entlang der Führung 79 im Rücklaufabschnitt 72.

In Figur 6 ist eine Seitenansicht auf die Auslenkeinheit 59 mit Auslenkelementen 60 dargestellt. Die Auslenkelemente 60a, 60b sind auf einem Barren 96 befestigt, der mit einem Führungsrohr 98 in Verbindung steht. Der Barren 96 erstreckt sich dabei unterhalb der Setzfläche 32 entlang der X- oder Y-Richtung 16, 18, um beim Verfahren eine Auslenkung auf die Setzfläche aufzuprägen. 32. In der ausgelenkten Position 92 befindet sich der Barren 96 am oberen Ende des Führungsrohrs 98. Nach Zusammentreffen der Puffer 86 bewegt sich der Barren 96 entlang des Führungsrohres 98 nach unten, und die Auslenkelemente 60a, 60b befinden sich in der abgesenkten Position 94.

Das erfindungsgemäße Verfahren zur Produktaufnahme in einen Käfig 26 einer Produkthandhabungsanlage 10 ermöglicht eine schnelle und sichere Beförderung von Produkten 28, 30 zwischen verschiedenen Stationen 52, 48. Zusätzlich nimmt die Produkthandhabungsanlage 10 mit erfindungsgemäßem Käfig 26 wenig Platz in Anspruch, was eine effiziente und ökonomische Raumaufteilung, insbesondere für Großproduktionsanlagen, ermöglicht.

Die Erfindung ist nicht auf die hier beschriebenen Ausführungsbeispiele und die darin hervorgehobenen Aspekte beschränkt. Vielmehr ist innerhalb des durch die anhängigen Ansprüche angegebenen Bereiches eine Vielzahl von Abwandlungen möglich, die im Rahmen fachmännischen Könnens liegen.

### Bezugszeichenliste

- 10: Produkthandhabungsanlage
- 11: Setzeinheit
- 12: Industrieroboter
- 14: Linearhandhabungseinheit
- 16: X-Richtung
- 18: Y-Richtung
- 20: Z-Richtung
- 22: Schwenkbewegung
- 24: Arm
- 26: Käfig
- 28: Produkt
- 29: Setzmuster
- 30: Produktlage
- 32: Setzfläche
- 34: Förderband (Kunststoffmodulband)
- 36: Umlaufrichtung
- 37: Ruheposition der Tragkörpergruppen
- 38: erste Tragkörpergruppe
- 39: aufnahmebereite Position der Tragkörpergruppen
- 40: zweite Tragkörpergruppe
- 42: Tragkörperführung
- 44: Umlenkrolle / Umlenkwalze
- 46: Anlenkstelle
- 48: Palette
- 50: Förderschiene
- 52: Pickplatz
- 54: Sicherungselemente
- 56: Produktlängsseite
- 58: Produktquerseite
- 59: Auslenkeinheit
- 60: erstes Auslenkelement
- 62: zweites Auslenkelement
- 64: Verfahrweg
- 66: Hebeabschnitt
- 67: Verfahrabschnitt
- 68: entstandener Spalt
- 70: Absenkabschnitt
- 72: Rücklaufabschnitt
- 74: erste Auslenkung Förderband
- 76: zweite Auslenkung Förderband
- 78: Rolle
- 79: Führung Auslenkelement
- 80: Kulisse
- 82: Abrollfläche
- 84: Kontaktstelle
- 86: Puffer
- 88: Sicherungskeil
- 89: Aussparung
- 90: Führung
- 92: aufgestellte Position Auslenkelemente 60, 62
- 94: abgesenkte Position Auslenkelemente 60, 62
- 96: Barren
- 98: Führungsrohr
- 100: Matte
- 102: Stäbe
- 104: Verbindungselement
- 106: zweite Position
- 108: erste, sichernde Position
- 110: Feder

## Patentansprüche

1. Verfahren zur Handhabung von Produkten (28, 30) in einer Produkthandhabungsanlage (10), das nachfolgende Verfahrensschritte umfasst:
a) Bereitstellen von mindestens einem Produkt (28, 30) auf einer flexiblen Setzfläche (32),
b) Aufsetzen eines Käfigs (26) ausgestattet mit mindestens einer verfahrbaren Tragkörpergruppe (38, 40) auf die flexible Setzfläche (32),
c) Aufprägen mindestens einer Auslenkung (74, 76) auf die flexible Setzfläche (32) und Verschieben der Auslenkung (74, 76) entlang der flexiblen Setzfläche (32), und
d) gleichzeitiges Einfahren der mindestens einen Tragkörpergruppe (38, 40) in einen durch die mindestens eine Auslenkung (74, 76) erzeugten Spalt (68) zwischen der flexiblen Setzfläche (32) und einer Unterseite der Produkte (28).

2. Verfahren gemäß Anspruch 1, **dadurch gekennzeichnet, dass** die Tragkörpergruppen (38, 40) im Käfig (26) in einer vertikalen Ruheposition (37) gehalten werden.

3. Verfahren gemäß einem der vorhergehenden Ansprüche, **dadurch gekennzeichnet, dass** die Tragkörpergruppen (38, 40) im Käfig (26) der Verschiebung der Auslenkung (74, 76) in der flexiblen Setzfläche (32) folgen und unter die Produkte (28, 30) gefahren werden.

4. Verfahren gemäß einem der vorhergehenden Ansprüche, **dadurch gekennzeichnet, dass** die Auslenkungen (74, 76) in der flexiblen Setzfläche (32) an einander gegenüberliegenden Enden einer Produktlängsseite (56) erzeugt werden.

5. Verfahren gemäß dem vorhergehenden Anspruch, **dadurch gekennzeichnet, dass** die an den Enden der Produktlängsseite (56) erzeugten Auslenkungen (74, 76) der flexiblen Setzfläche (32) durch aufeinander Zubewegen von Auslenkelementen (60, 62) unterhalb der flexiblen Setzfläche (32) verschoben werden.

6. Verfahren gemäß einem der vorhergehenden Ansprüche, **dadurch gekennzeichnet, dass** die in der flexiblen Setzfläche (32) erzeugten Auslenkungen (74, 76) gleichzeitig aufeinander zu verfahren werden.

7. Verfahren gemäß einem der vorhergehenden Ansprüche, **dadurch gekennzeichnet, dass** die in der flexiblen Setzfläche (32) verfahrbaren Auslenkungen (74, 76) mittels mechanisch betätigbarer Auslenkelemente (60, 62) erzeugt werden.

8. Verfahren gemäß einem der vorhergehenden Ansprüche, **dadurch gekennzeichnet, dass** die Auslenkelemente (60, 62), welche der flexiblen Setzfläche (32) Auslenkungen (74, 76) aufprägen, elektromotorisch, pneumatisch und/oder hydraulisch angetrieben sind.

9. Verfahren gemäß einem der vorhergehenden Ansprüche, **dadurch gekennzeichnet, dass** die Auslenkelemente (60, 62) entlang eines geschlossenen, kurvenförmigen Verfahrwegs (64) verfahren werden.

10. Verfahren gemäß dem vorhergehenden Anspruch, **dadurch gekennzeichnet, dass** der geschlossene, kurvenförmige Verfahrweg (64) einen Hebeabschnitt (66) mit einer Kulisse (80), in dem das Auslenkelement (60, 62) angehoben wird, einen Verfahrabschnitt (67), in dem sich das Auslenkelement (60, 62) in angehobener Position (92) befindet, einen Absenkabschnitt (70), in dem das Auslenkelement (60, 62) abgesenkt wird, sowie einen Rücklaufabschnitt (72), in dem das Auslenkelement (60, 62) zurückgeführt wird, umfasst.

11. Vorrichtung zur Handhabung von Produkten (28, 30) gemäß des Verfahrens nach einem der Ansprüche 1 bis 10 in einer Produkthandhabungsanlage (10), die nachfolgende Komponenten umfasst:
- eine Station (52), die mindestens ein Produkt (28, 30) auf einer flexiblen Setzfläche (32) bereitstellt;
- eine Auslenkeinheit (59), die der flexiblen Setzfläche (32) zugeordnet ist, und ausgebildet ist, mindestens eine Auslenkung (74, 76) auf die flexible Setzfläche (32) aufzuprägen und entlang der flexiblen Setzfläche (32) zu verschieben;
- einen Käfig (26) zur Aufnahme von Produkten (28), wobei der Käfig (26) mit mindestens einer verfahrbaren Tragkörpergruppe (3 8, 40) ausgestattet ist, die eine flexible Matte (100) aus Stäben (102) mit flexiblen Verbindungselementen (104) umfasst, und die gleichzeitig mit Verschieben der mindestens eine Auslenkung (74,76) in einen durch die mindestens eine Auslenkung (74,76) erzeugten Spalt (68) zwischen der flexiblen Setzfläche (32) und eien Unterseite der Produkte (28,30) einfahrbar ist.

12. Vorrichtung gemäß Anspruch 11, **dadurch gekennzeichnet, dass** die Auslenkeinheit (59) Auslenkelemente (60, 62) umfasst, die unterhalb der Setzfläche (32) in einer Führung (79) für einen geschlossene, kurvenförmige Verfahrweg (64) verfahrbar gelagert sind.

13. Vorrichtung gemäß einem der Ansprüche 11 oder 12, **dadurch gekennzeichnet, dass** die Führung (79) eine Kulisse (80) zum Anheben des Auslenkelements (60, 62), einen Verfahrabschnitt (67) zum Verfahren des Auslenkelementes in angehobener Position (92), einen Absenkabschnitt (70) zum Absenken der Auslenkelementes (60, 62) sowie einen Rücklaufabschnitt (72) zum Rückführen des Auslenkelementes (60, 62) umfasst.

14. Vorrichtung gemäß einem der Ansprüche 11 bis 13, **dadurch gekennzeichnet, dass** die Auslenkelemente (60, 62), welche der flexiblen Setzfläche (32) Auslenkungen (74, 76) aufprägen, elektromotorisch, pneumatisch und/oder hydraulisch angetrieben sind.

15. Vorrichtung gemäß einem der Ansprüche 11 bis 14, **dadurch gekennzeichnet, dass** die Auslenkelemente (60, 62) mechanisch betätigbar sind, um in der flexiblen Setzfläche (32) verfahrbare Auslenkungen (74, 76) zu erzeugen.

16. Vorrichtung gemäß einem der Ansprüche 11 bis 15, **dadurch gekennzeichnet, dass** die Tragkörpergruppen (38, 40) im Käfig (26) und die Auslenkelemente (60, 62) unterhalb der Setzfläche (32) an den Enden der Produktlängsseite (56) angeordnet sind und zur Mitte der Produktlage hin verfahrbar gelagert sind.

17. Vorrichtung gemäß einem der Ansprüche 11 bis 16, **dadurch gekennzeichnet, dass** die Tragkörpergruppen (38, 40) in der Ruheposition (37) vertikal angeordnet sind und sich in der Aufnahmeposition (39) unter dem Produkt (28, 30) befinden.

18. Verwendung der Vorrichtung nach einem der Ansprüche 11 bis 17 zum Palettieren oder Transportieren von Produkten (28, 30).

## Claims

1. Method for the handling of products (28, 30) in a product-handling installation (10), comprising the following method steps:
a) providing at least one product (28, 30) on a flexible placing area (32),
b) placing a cage (26), which is equipped with at least one displaceable supporting-body group (38, 40), onto the flexible placing area (32),
c) imparting at least one deflection (74, 76) to the flexible placing area (32) and displacing the deflection (74, 76) along the flexible placing area (32), and
d) simultaneously retracting the at least one supporting-body group (38, 40) into a gap (68) created by the at least one deflection (74, 76) between the flexible placing area (32) and a lower side of the products (28).

2. Method according to Claim 1, **characterized in that** the supporting-body groups (38, 40), in the cage (26), are held in a vertical rest position (37).

3. Method according to one of the preceding claims, **characterized in that** the supporting-body groups (38, 40) in the cage (26) follow the displacement of the deflection (74, 76) in the flexible placing area (32) and are propelled below the products (28, 30).

4. Method according to one of the preceding claims, **characterized in that** the deflections (74, 76) in the flexible placing area (32) are generated at ends of a product longitudinal side (56) that lie opposite one another.

5. Method according to one of the preceding claims, **characterized in that** the deflections (74, 76) generated at the ends of the product longitudinal side (56) of the flexible placing area (32) are displaced by moving deflection elements (60, 62) toward one another below the flexible placing area (32).

6. Method according to one of the preceding claims, **characterized in that** the deflections (74, 76) which are generated in the flexible placing area (32) are displaced so as to simultaneously move toward one another.

7. Method according to one of the preceding claims, **characterized in that** the deflections (74, 76) which are displaceable in the flexible placing area (32) are generated by means of mechanically actuatable deflection elements (60, 62).

8. Method according to one of the preceding claims, **characterized in that** the deflection elements (60, 62), which impart deflections (74, 76) to the flexible placing area (32), are electromotively, pneumatically and/or hydraulically driven.

9. Method according to one of the preceding claims, **characterized in that** the deflection elements (60, 62) are displaced along a closed, curved displacement path (64).

10. Method according to one of the preceding claims, **characterized in that** the closed, curved displacement path (64) comprises a lifting portion (66) having a gate (80), in which the deflection element (60, 62) is raised, a displacement portion (67), in which the deflection element (60, 62) is situated in the raised position (92), a lowering portion (70), in which the deflection element (60, 62) is lowered, and a return-motion portion (72), in which the deflection element (60, 62) is guided back.

11. Device for the handling of products (28, 30) according to the method according to one of Claims 1 to 10 in a product-handling installation (10) which comprises the following components:
- a station (52) which provides at least one product (28, 30) on a flexible placing area (32);
- a deflection unit (59) which is assigned to the flexible placing area (32) and is configured to impart at least one deflection (74, 76) to the flexible placing area (32) and displace said deflection (74, 76) along the flexible placing area (32);
- a cage (26) for picking up products (28), wherein the cage (26) is equipped with at least one displaceable supporting-body group (38, 40) which comprises a flexible mat (100) made of rods (102) having flexible connection elements (104), and which, simultaneously with the displacement of the at least one deflection (74,76), can be propelled into a gap (68) created by the at least one deflection (74, 76) between the flexible placing area (32) and a lower side of the products (28, 30).

12. Device according to Claim 11, **characterized in that** the deflection unit (59) comprises deflection elements (60, 62) which are displaceably mounted below the placing area (32) in a guide (79) for a closed, curved displacement path (64).

13. Device according to one of Claims 11 or 12, **characterized in that** the guide (79) comprises a gate (80) for raising the deflection element (60, 62), a displacement portion (67) for displacing the deflection element in a raised position (92), a lowering portion (70) for lowering the deflection element (60, 62) and a return-motion portion (72) for guiding back the deflection element (60, 62).

14. Device according to one of Claims 11 to 13, **characterized in that** the deflection elements (60, 62) which impart deflections (74, 76) to the flexible placing area (32) are electromotively, pneumatically and/or hydraulically driven.

15. Device according to one of Claims 11 to 14, **characterized in that** the deflection elements (60, 62) are mechanically actuatable in order to generate displaceable deflections (74, 76) in the flexible placing area (32).

16. Device according to one of Claims 11 to 15, **characterized in that** the supporting-body groups (38, 40) in the cage (26) and the deflection elements (60, 62) below the placing area (32) are arranged at the ends of the product longitudinal side (56) and mounted so as to be displaceable toward the center of the product layer.

17. Device according to one of Claims 11 to 16, **characterized in that** the supporting-body groups (38, 40), in the rest position (37), are vertically arranged and, in the pick-up position (39), are situated below the product (28, 30).

18. Use of the device according to one of Claims 11 to 17 for the palletizing or transporting of products (28, 30).

## Revendications

1. Procédé de manutention de produits (28, 30) dans une installation de manutention de produits (10), qui comprend les étapes de procédé suivantes:
a) préparation d'au moins un produit (28, 30) sur une surface de dépôt flexible (32),
b) pose d'une cage (26) équipée d'au moins un groupe de corps porteurs (38, 40) sur la surface de dépôt flexible (32),
c) application d'au moins une déviation (74, 76) à la surface de dépôt flexible (32) et déplacement de la déviation (74, 76) le long de la surface de dépôt flexible (32), et
d) introduction simultanée dudit au moins un groupe de corps porteurs (38, 40) dans une fente (68) formée par ladite au moins une déviation (74, 76) entre la surface de dépôt flexible (32) et une face inférieure des produits (28).

2. Procédé selon la revendication 1, **caractérisé en ce que** les groupes de corps porteurs (38, 40) sont maintenus dans une position de repos verticale (37) dans la cage (26).

3. Procédé selon l'une quelconque des revendications précédentes, **caractérisé en ce que** les groupes de corps porteurs (38, 40) suivent dans la cage (26) le déplacement de la déviation (74, 76) dans la surface de dépôt flexible (32) et sont déplacés en dessous des produits (28, 30).

4. Procédé selon l'une quelconque des revendications précédentes, **caractérisé en ce que** les déviations (74, 76) dans la surface de dépôt flexible (32) sont produites à des extrémités opposées l'une à l'autre d'un long côté des produits (56).

5. Procédé selon l'une quelconque des revendications précédentes, **caractérisé en ce que** les déviations (74, 76) de la surface de dépôt flexible (32) produites aux extrémités d'un long côté des produits (56) sont déplacées par le mouvement l'un vers l'autre d'éléments de déviation (60, 62) en dessous de la surface de dépôt flexible (32).

6. Procédé selon l'une quelconque des revendications précédentes, **caractérisé en ce que** les déviations (74, 76) produites dans la surface de dépôt flexible (32) sont déplacées simultanément l'une vers l'autre.

7. Procédé selon l'une quelconque des revendications précédentes, **caractérisé en ce que** les déviations (74, 76) produites dans la surface de dépôt flexible (32) sont produites au moyen d'éléments de déviation (60, 62) actionnables mécaniquement.

8. Procédé selon l'une quelconque des revendications précédentes, **caractérisé en ce que** les éléments de déviation (60, 62), qui impriment des déviations (74, 76) dans la surface de dépôt flexible (32), sont entraînés par un moteur électrique, par voie pneumatique et/ou par voie hydraulique.

9. Procédé selon l'une quelconque des revendications précédentes, **caractérisé en ce que** les éléments de déviation (60, 62) sont déplacés le long d'une trajectoire courbe fermée (64).

10. Procédé selon la revendication précédente, **caractérisé en ce que** la trajectoire courbe fermée (64) comprend une section ascendante (66) avec une coulisse (80), dans laquelle l'élément de déviation (60, 62) est soulevé, une section de déplacement (67), dans laquelle l'élément de déviation (60, 62) se trouve en position haute (92), une section descendante (70), dans laquelle l'élément de déviation (60, 62) est abaissé, ainsi qu'une section de retour (72), dans laquelle l'élément de déviation (60, 62) est ramené au départ.

11. Dispositif de manutention de produits (28, 30) selon le procédé selon l'une quelconque des revendications 1 à 10 dans une installation de manutention de produits (10), qui comprend les composants suivants:
- une station (52), qui prépare au moins un produit (28, 30) sur une surface de dépôt flexible (32);
- une unité de déviation (59), qui est associée à la surface de dépôt flexible (32) et qui est configurée de façon à imprimer au moins une déviation (74, 76) dans la surface de dépôt flexible (32) et à se déplacer le long de la surface de dépôt flexible (32);
- une cage (26) destinée à recevoir des produits (28), dans lequel la cage (26) est équipée d'au moins un groupe de corps porteurs déplaçable (38, 40), qui comprend un tapis flexible (100) de barres (102) avec des éléments de liaison flexibles (104), et qui peut en même temps être introduite avec le déplacement de ladite au moins une déviation (74, 76) dans une fente (68) produite par ladite au moins une déviation (74, 76) entre la surface de dépôt flexible (32) et une face inférieure des produits (28, 30).

12. Dispositif selon la revendication 11, **caractérisé en ce que** l'unité de déviation (59) comprend des éléments de déviation (60, 62), qui sont disposés en dessous de la surface de dépôt (32) de façon déplaçable dans un guidage (79) pour suivre une trajectoire courbe fermée (64).

13. Dispositif selon une des revendications 11 ou 12, **caractérisé en ce que** le guidage (79) comprend une coulisse (80) pour soulever l'élément de déviation (60, 62), une section de déplacement (67) pour le déplacement de l'élément de déviation en position haute (92), une section descendante (70) pour l'abaissement de l'élément de déviation (60, 62) ainsi qu'une section de retour (72) pour le retour de l'élément de déviation (60, 62).

14. Dispositif selon l'une quelconque des revendications 11 à 13, **caractérisé en ce que** les éléments de déviation (60, 62), qui impriment des déviations (74, 76) dans la surface de dépôt flexible (32), sont entraînés par un moteur électrique, par voie pneumatique et/ou par voie hydraulique.

15. Dispositif selon l'une quelconque des revendications 11 à 14, **caractérisé en ce que** les éléments de déviation (60, 62) sont actionnables mécaniquement, afin de produire des déviations (74, 76) déplaçables dans la surface de dépôt flexible (32).

16. Dispositif selon l'une quelconque des revendications 11 à 15, **caractérisé en ce que** les groupes de corps porteurs (38, 40) sont disposés dans la cage (26) et les éléments de déviation (60, 62) sont disposés en dessous de la surface de dépôt (32) aux extrémités du long côté des produits (56) et ils sont montés de façon déplaçable vers le milieu de la position du produit.

17. Dispositif selon l'une quelconque des revendications 11 à 16, **caractérisé en ce que** les groupes de corps porteurs (38, 40) sont disposés verticalement dans la position de repos (37) et se trouvent sous le produit (28, 30) dans la position de réception (39).

18. Utilisation du dispositif selon l'une quelconque des revendications 11 à 17 pour palettiser ou transporter des produits (28, 30).
